# EUROPEAN PATENT APPLICATION

(11) **EP 4 227 967 A1**
(43) Date of publication of application: **16.08.2023**
(21) Application number: 23156354.5
(22) Date of filing: 13.02.2023
(51) Int. Cl.: H01G 11/20, H01G 9/00, H01G 9/14, H01G 9/07, H01G 9/28, H02J 7/00

(54) **REFORMING CIRCUITRY FOR ELECTROLYTIC CAPACITORS IN VARIABLE FREQUENCY DRIVE APPLICATIONS**

(30) Priority: 11.02.2022 US 202263309191 P
(71) Applicant: Carrier Corporation, Palm Beach Gardens, FL 33418 (US)
(72) Inventor: AGIRMAN, Ismail, Southington, 06489 (US); BORISOV, Konstantin, Palm Beach Gardens, 33418 (US); SLAY, William, Marietta, 30066 (US)
(74) Representative: Dehns

(57) **Abstract**

Provided are embodiments for a system and method (500) for reforming an electrolytic capacitor (C1, C3, C4). Embodiments can include disabling a primary switch (102, 302, 402), wherein the primary switch (102, 302, 402) selectively couples a power supply (104, 304, 404) to the electrolytic capacitor (C1, C3, C4), and providing a signal to one or more reforming switches (RR1, RR2, RR3, RR4, RR5) to control the one or more reforming switches (RR1, RR2, RR3, RR4, RR5). Embodiments can also include completing the reforming process based at least in part on a detection of a voltage of the electrolytic capacitor (C1, C3, C4) or a duration of time, and disabling the one or more switches responsive to completing the reforming process.

## Description

### BACKGROUND

The present invention relates to circuitry, and more specifically, to reforming circuitry for electrolytic capacitors.

Electrolytic capacitors can be used as an option for variable frequency drive (VFD) design due to their low cost and large capacitance per volume ratio. However, careful power up procedures are required with electrolytic capacitor type to avoid premature failure of the electrolytic capacitor after extended periods of time without power. As such, before chillers with VFD are fully commissioned at a customer site, the electrolytic capacitors require partial voltage burn in for a specific time duration. Although, specialized equipment may be used for such, the specialized equipment adds to the total commissioning cost. Therefore, there may be a need to efficiently perform the reforming process for electrolytic capacitors.

### BRIEF DESCRIPTION

According to a first aspect of the invention, a circuit for reforming an electrolytic capacitor is provided. The circuit comprises an electrolytic capacitor; a primary switch operable to selectively couple a power supply to the electrolytic capacitor; a reforming switch in series with a resistor, wherein a combination of the reforming switch and the resistor is in parallel with the primary switch; and a controller. The controller that is configured to initiate a reforming process, wherein the primary switch is disabled; provide a signal to one or more reforming switches to control the one or more reforming switches; completing the reforming process based at least in part on a detection of a voltage of the electrolytic capacitor or a duration of time; and responsive to completing the reforming process, disabling the one or more reforming switches.

The reforming process may comprise the controller being further configured to: maintain a voltage of the electrolytic capacitor at a first threshold for a first interval of time; and maintain the voltage of the electrolytic capacitor at a subsequent threshold for a subsequent interval of time, wherein the subsequent voltage is higher than the first threshold.

The circuit may include a controller that is configured to: repeatedly increase and maintain the voltage of the electrolytic capacitor at a next threshold for an interval of time until the duration of time for the reforming process is reached.

The circuit may include a plurality of branches that are arranged in parallel, wherein each branch of the plurality of branches comprises a reforming switch in series with a resistor.

The circuit may include a voltage sensor, wherein the voltage sensor that is configured to sense a voltage of the electrolytic capacitor and provide the voltage to the controller.

The circuit may include a controller that is further configured to monitor the voltage signal of the electrolytic capacitor.

The circuit may include a controller that is further configured to modulate switching of the one or more reforming switches based on the monitoring the voltage signal.

The circuit may include a controller that is further configured to switch a next reforming switch of the one or more reforming switches based at least in part an expiration of a time.

The circuit may include a primary switch and one or more reforming switches are at least one of a relay, a contactor, or a switching device.

According to a second aspect of the invention, a method for reforming an electrolytic capacitor is provided. The method comprises disabling a primary switch, wherein the primary switch selectively couples a power supply to the electrolytic capacitor; providing a signal to one or more reforming switches to control the one or more reforming switches; completing the reforming process based at least in part on a detection of a voltage of the electrolytic capacitor or a duration of time; and responsive to completing the reforming process, disabling the one or more switches.

The method may include maintaining a voltage of the electrolytic capacitor at a first threshold for a first interval of time; and maintaining the voltage of the electrolytic capacitor at a subsequent threshold for a subsequent interval of time, wherein the subsequent voltage is higher than the first threshold.

The method may include repeatedly increasing and maintaining the voltage of the electrolytic capacitor at a next threshold for an interval of time until the duration of time for the reforming process is reached.

The method may include a plurality of branches arranged in parallel, wherein each branch of the plurality of branches comprises a reforming switch in series with a resistor.

The method may include sensing a voltage of the electrolytic capacitor and providing the voltage to the controller.

The method may include continuously monitoring the voltage of the electrolytic capacitor.

The method may include modulating switching of the one or more reforming switches based on monitoring the voltage.

The method may include switching a next reforming switch of the one or more reforming switches based at least in part an expiration of a time.

The method may include that the primary switch and the one or more reforming switches are at least one of a relay, a contactor, or a switching device.

Technical effects of embodiments of the present invention eliminate the need for specialized equipment during the commissioning of equipment including an electrolytic capacitor.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

Certain embodiments of the invention will now be described, by way of example only, and with reference to the accompanying drawings, in which like elements are numbered alike and in which :
FIG. 1 depicts an exemplary circuit arrangement comprising an electrolytic capacitor;
FIG. 2 depicts an exemplary controller that can be used to perform the reforming process;
FIG. 3 depicts an exemplary circuit arrangement for reforming an electrolytic capacitor;
FIG. 4 depicts an exemplary circuit arrangement for reforming an electrolytic capacitor; and
FIG. 5 depicts an exemplary method for reforming an electrolytic capacitor.

### DETAILED DESCRIPTION

One or more illustrative embodiments of the invention are described herein. Such embodiments are merely illustrative of the scope of this invention and are not intended to be limiting in any way. Accordingly, variations, modifications, and equivalents of embodiments disclosed herein are also within the scope of this invention.

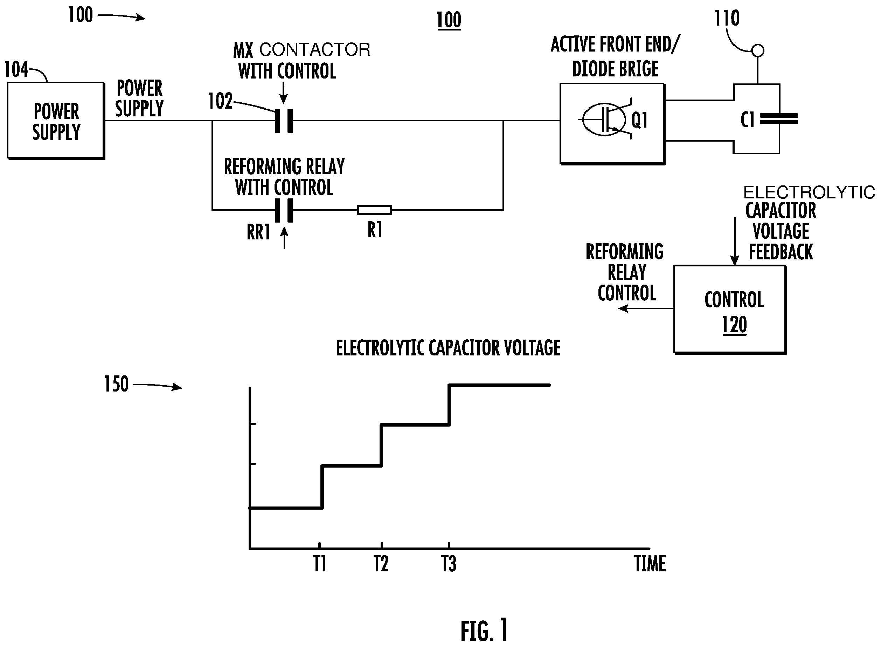

Now referring to FIG. 1, an arrangement for an exemplary circuit 100 for reforming an electrolytic capacitor is shown. The circuit 100 includes a primary switch 102 that is arranged between a power supply 104 and an electrolytic capacitor (hereinafter referred to as "capacitor C1"). In one or more embodiments, the primary switch 102 can be a contactor. In other embodiments, the primary switch 102 can include a relay, a contactor, or other switch-type device and is not intended to be limited by the examples described herein. The circuit 100 also includes a reforming switch RR1 that is connected in series with a resistor R1. In one or more embodiments of the invention, the reforming switch RR1 can be a reforming relay. In other embodiments, the reforming switch RR1 can include a contactor, a relay, or other switch-type device and is not intended to be limited by the examples described herein. Relays are electrically-controlled switches and can be a normally-closed relay or a normallyopen relay. The reforming switch RR1 is operated to hold the capacitor at different voltage levels for a period of time where each subsequent voltage level is higher than the previous voltage level. The voltage across the capacitor is sensed by the controller 120, and reforming switch RR1 is modulated to achieve the reference voltage. The value of the resistor R1 may be tuned to achieve the desired voltage change rate on the capacitor C1. The combination of the reforming switch RR1 and the resistor R1 may be referred to as a "branch."

The active front end/diode bridge circuit Q1 is represented as a transistor, it can be appreciated that other configurations including one or more switches, diodes, and/or other circuit components can be included. In one or more embodiments of the invention, an active front end/diode bridge circuit Q1 is coupled to the primary switch 102 and the branch comprising the reforming switch and resistor R1. The active front end/diode bridge circuit can also be coupled to a first terminal and second terminal of the capacitor C1.

In some embodiments of the invention, a voltage sensor 110 can be coupled to the circuit 100 across the capacitor C1 to sense or detect the voltage during the reforming process and/or during operation of the circuit. The sensed voltage can be provided to a controller 120 as a feedback voltage signal which can be used to control the operation the reforming switch RR1 in the circuit 100.

The controller 120 is configured to control the components of the circuit 100 during the reforming process and during normal operation. During the reforming process, the primary switch 102 is disabled which opens the connection between the power supply 104 and the active front end/diode bridge Q1/capacitor C1. The controller 120 is further configured to provide a signal to close the reforming switch RR1 to provide a connection from the power supply 104 through the reforming switch RR1 and resistor R1 to the capacitor C1. The controller 120 is configured to monitor the voltage capacitor. The controller 120 modulates the reforming switch RR1 to open/close the connection based on the sensed capacitor voltage to achieve a voltage/time profile for the capacitor C1.

The controller 120 is configured to control and modulate the reforming switch RR1 to achieve desired reference voltage such as that illustrated in a step-like voltage/time profile shown in the graph 150 for the electrolytic capacitor voltage. The x-axis of the graph 150 represents time and the y-axis represent the voltage measured at the capacitor C1. In this non-limiting example, the controller 120 is configured to maintain the voltage of the capacitor C1 at a first threshold voltage until a first time interval T1 has been reached. Then, the controller 120 can maintain a second threshold voltage until a second time interval T2 has been reached. The controller 120 is configured to maintain a third threshold voltage until a third time interval T3 has been reached. It can be appreciated that a different number of threshold voltages can be used for the reforming process and it is not intended to be limited by the threshold voltages shown in the graph 150. The number of threshold voltages and the threshold voltages may be selected based on the voltage capacity/type of the capacitor C1. Upon completing the reforming process to properly burn in the capacitor C1, the controller 120 is configured to open the reforming switch RR1. The primary switch 102 can be used to energize or deenergize the VFD capacitors, diode bridge Q1 and/or other circuits in VFD (not shown).

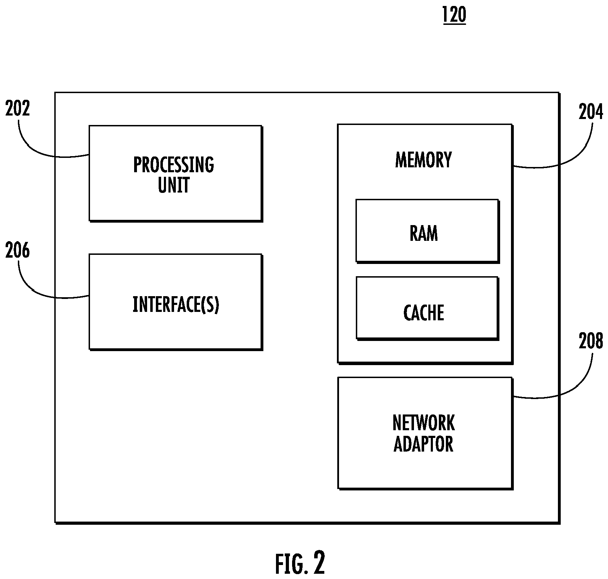

FIG. 2 depicts an exemplary controller 120 that may be used in the embodiments of the invention described herein. The controller 120 includes a processing unit 202 and a memory 204 to carry out the operations for reforming process of the electrolytic capacitor and normal operation of the circuit. It can be appreciated the controller 120 can include other components or modules such as an interface 206, network adapter 208, and is not limited by the components shown in FIG. 2. In one or more embodiments of the invention, the processing unit 202 can include a processor of a general-purpose computer, special purpose computer, or other programmable data processing apparatus configured to execute instruction via the processor of the computer or other programmable data processing apparatus. The memory 106 can include any one or combination of volatile memory elements (e.g., random access memory (RAM, such as DRAM, SRAM, SDRAM, *etc.))* and nonvolatile memory elements (e.g., ROM, erasable programmable read only memory (EPROM), electronically erasable programmable read only memory (EEPROM), etc.).

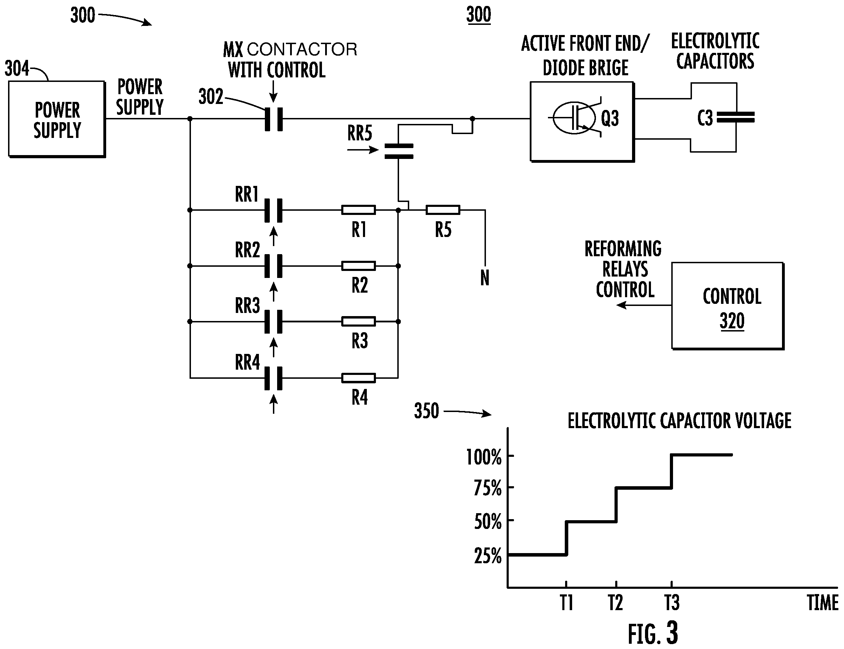

FIG. 3 depicts another arrangement of an exemplary circuit 300 for reforming an electrolytic capacitor. The circuit 300 includes a power supply 304, a primary switch 302, an active front-end/diode bridge Q3, and electrolytic capacitor C3 similar to that shown in FIG. 1. In one or more embodiments, the primary switch 302 can be a contactor. In other embodiments, the primary switch 302 can include a relay, a contactor, or other switch-type device and is not intended to be limited by the examples described herein. The circuit 300 also includes a controller 320 to control the reforming process of the capacitor C3. Unlike circuit 100, the circuit 300 does not require a voltage sensor to sense the voltage of the capacitor C3. The circuit 300 includes a plurality of branches that are connected in parallel with the other branches. Each branch includes a reforming switch RR1-RR5 that is connected in series with a corresponding resistor R1-R5. In one or more embodiments of the invention, the reforming switches RR1-RR5 can be a reforming relay. In other embodiments, the reforming switch RR1-RR5 can include a contactor, a relay, or other switch-type device and is not intended to be limited by the examples described herein.

The controller 320 can be configured to control each of the reforming switches RR1-RR5 based on an elapsed period of time. The controller 320 is connected to the primary switch 302 and reforming switches RR1-RR5 and is further configured to provide a signal to control the reforming switches RR1-RR5. During the reforming process, the primary switch 302 remains in the Off state. The controller 320 is configured to selectively close each of the reforming switches RR1-RR5 in a sequence to achieve the desired time/voltage profile for the capacitor C3 such as that shown in graph 350. That is, the controller 320 is configured to switch each branch comprising the reforming switches RR1 through RR4 within predefined/hardcoded or pre-calculated timing.

During the reforming process, the switch 302 is disabled (Off state). Next, the controller 320 sends a signal to the reforming switch RR5 to close the connection. The controller 320 then closes one of the reforming switches RR1-RR4 to maintain a voltage level of the capacitor C3 for a period of time to achieve a determined voltage/time profile. After the reforming process has been completed, the controller 320 can disable each of the reforming switches RR1-RR5 and operates the circuit 300 under normal operation.

The graph 350 depicts an example time/voltage profile for the capacitor C3. As shown, the controller 320 is configured to increase the voltage provided to the capacitor C3 after holding each voltage for a period of time. After the expiration of a time period, the controller 320 connects the next reforming switch of another branch to achieve the next voltage level. This process is repeated until the entire duration of time has elapsed.

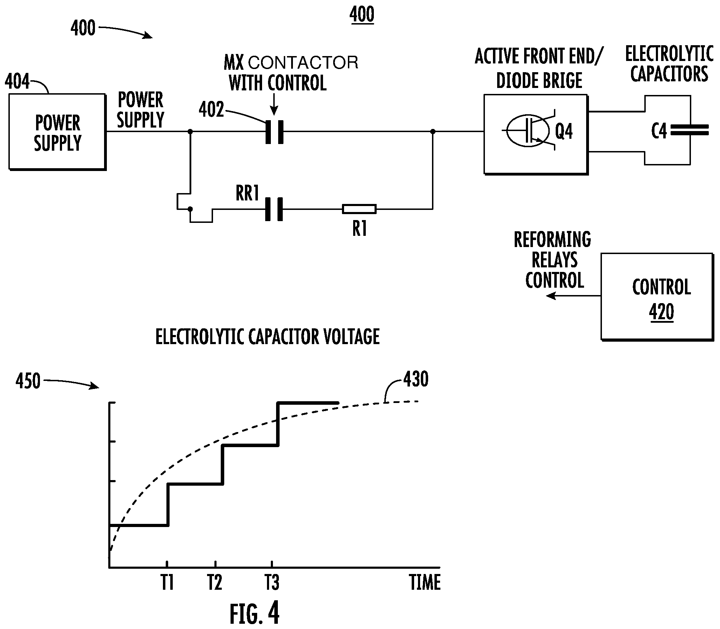

FIG. 4 depicts a different arrangement for an exemplary circuit 400 used for reforming an electrolytic capacitor. The circuit 400 includes a power supply 404, a primary switch 402, an active front-end/diode bridge Q4, and electrolytic capacitor C4 similar to that shown in FIG. 1. In one or more embodiments, the primary switch 402 can be a contactor. In other embodiments, the primary switch 402 can include a relay, a contactor, or other switch-type device and is not intended to be limited by the examples described herein. The circuit 400 also includes a controller 420 for controlling the reforming process of the electrolytic capacitor.

Unlike the circuit 100, the circuit 400 does not require a voltage sensor to sense the voltage of the capacitor C4. During the initiation of the reforming process the primary switch 402 is disabled. The controller 420 then closes the reforming switch RR1. In one or more embodiments of the invention, the reforming switch RR1 can be a reforming relay. In other embodiments, the reforming switch RR1 can include a contactor, a relay, or other switch-type device and is not intended to be limited by the examples described herein. In this configuration, the reforming resistor R1 is sized in such a way the voltage across the capacitor C4 increases according to the exponential curve 430 as shown in the time/voltage profile of graph 450.

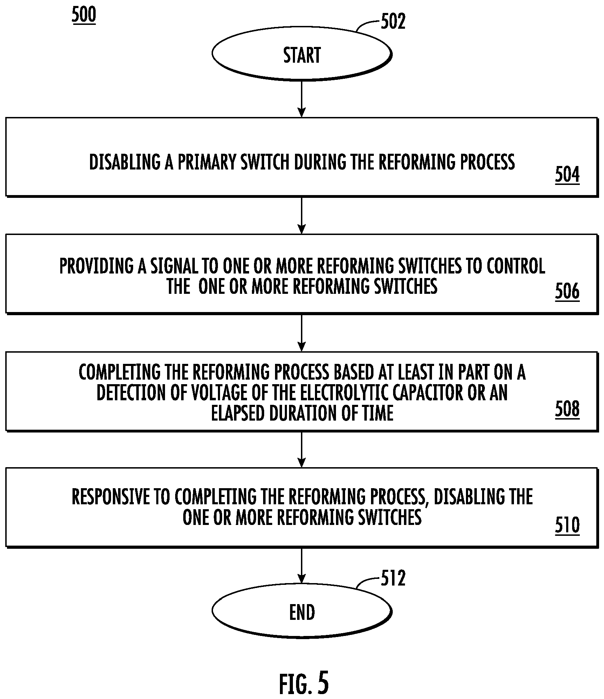

FIG. 5 depicts a method 500 for reforming an electrolytic capacitor in accordance with one or more embodiments of the invention. The method 500 begins at block 502 and proceeds to block 504 where the primary switch is disabled during the reforming process. At block 506, the controller provides a signal to one or more reforming switches to control the one or more reforming switches.

At block 508, the reforming process is completed based at least in part on a detection of a voltage of the electrolytic capacitor or a duration of time. In one or more embodiments of the invention, the controller is configured to control the components (e.g., reforming relays of each branch) of the circuit and hold the voltage of the capacitor at various voltage thresholds to perform the reforming process.

At block 510, the controller disables the one or more reforming switches. The controller provides a signal to each of the reforming switches to open the connection. Prior to closing the primary switch for normal operation, other processes may be completed such as but not limited to fault checks, no failures detected, initiating VFD run command, etc.

The method 500 ends at block 512. The process flow diagram of FIG. 5 is not intended to indicate that the operations of the method 500 are to be executed in any particular order, or that all of the operations of the method 500 are to be included in every case. Additionally, the method 500 can include any suitable number of additional operations.

A detailed description of one or more embodiments of the disclosed apparatus and method are presented herein by way of exemplification and not limitation with reference to the Figures.

The term "about" is intended to include the degree of error associated with measurement of the particular quantity based upon the equipment available at the time of filing the application.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made and equivalents may be substituted for elements thereof without departing from the scope of the present invention. In addition, many modifications may be made to adapt a particular situation or material to the teachings of the present invention without departing from the essential scope thereof. Therefore, it is intended that the present invention not be limited to the particular embodiment disclosed as the best mode contemplated for carrying out this present invention, but that the present invention will include all embodiments falling within the scope of the claims.

## Claims

1. A circuit (100, 300, 400) for reforming electrolytic capacitors (C1, C3, C4), the circuit comprising:
an electrolytic capacitor (C1, C3, C4);
a primary switch (102, 302, 402) operable to selectively couple a power supply (104, 304, 404) to the electrolytic capacitor;
a reforming switch (RR1, RR2, RR3, RR4, RR5) in series with a resistor (R1, R2, R3, R4, R5), wherein a combination of the reforming switch and the resistor is in parallel with the primary switch;
a controller (120, 320, 420) that is configured to:
initiate a reforming process, wherein the primary switch is disabled;
provide a signal to the reforming switch to control the the reforming switch;
completing the reforming process based at least in part on a detection of a voltage of the electrolytic capacitor or a duration of time; and
responsive to completing the reforming process, disabling reforming switch.

2. The circuit (100, 300) of claim 1, wherein the reforming process comprises the controller (120, 320) being configured to:
maintain a voltage of the electrolytic capacitor (C1, C3) at a first threshold for a first interval of time (T 1); and
maintain the voltage of the electrolytic capacitor (C1, C3) at a subsequent threshold for a subsequent interval of time (T2), wherein the subsequent voltage is higher than the first threshold.

3. The circuit (100, 300) of claim 2, wherein the controller (120, 320) is configured to: repeatedly increase and maintain the voltage of the electrolytic capacitor (C1, C3) at a next threshold for an interval of time until the duration of time for the reforming process is reached.

4. The circuit (300) of any of claims 1 to 3, comprising a plurality of branches arranged in parallel, wherein each branch of the plurality of branches comprises a reforming switch (RR1, RR2, RR3, RR4, RR5) in series with a resistor (R1, R2, R3, R4, R5).

5. The circuit (300) of claim 4, wherein the controller (320) is configured to switch a next reforming switch of the plurality of reforming switches (RR1, RR2, RR3, RR4, RR5) based at least in part on expiration of a time.

6. The circuit (100) of any of claims 1 to 5, comprising a voltage sensor (110), wherein the voltage sensor (110) is configured to sense a voltage of the electrolytic capacitor (C1) and provide the voltage to the controller (120);
optionally wherein the controller (120) is configured to monitor the voltage signal of the electrolytic capacitor (C1);
further optionally wherein the controller (120) is configured to modulate switching of the reforming switch(es) (RR1, RR2, RR3, RR4, RR5) based on the monitoring the voltage signal.

7. The circuit (100, 300, 400) of any of claims 1 to 6, wherein the primary switch (102, 302, 402) and the reforming switch(es) (RR1, RR2, RR3, RR4, RR5) are at least one of a relay, a contactor, or a switching device.

8. A method (500) for reforming an electrolytic capacitor (C1, C3, C4), the method (500) comprising:
disabling (504) a primary switch (102, 302, 402), wherein the primary switch selectively couples a power supply (104, 304, 404) to the electrolytic capacitor (C1, C3, C4);
providing (506) a signal to one or more reforming switches (RR1, RR2, RR3, RR4, RR5) to control the one or more reforming switches;
completing (508) the reforming process based at least in part on a detection of a voltage of the electrolytic capacitor or a duration of time; and
responsive to completing the reforming process, disabling (510) the one or more switches.

9. The method (500) of claim 8, wherein the reforming process comprises maintaining a voltage of the electrolytic capacitor (C1, C3) at a first threshold for a first interval of time (T 1); and
maintaining the voltage of the electrolytic capacitor (C1, C3) at a subsequent threshold for a subsequent interval of time (T2), wherein the subsequent voltage is higher than the first threshold.

10. The method (500) of claim 9, comprising repeatedly increasing and maintaining the voltage of the electrolytic capacitor (C1, C3) at a next threshold for an interval of time until the duration of time for the reforming process is reached.

11. The method (500) of any of claims 8 to 10, comprising a plurality of branches arranged in parallel, wherein each branch of the plurality of branches comprises a reforming switch (RR1, RR2, RR3, RR4, RR5) in series with a resistor (R1, R2, R3, R4, R5).

12. The method (500) of claim 11, comprising switching a next reforming switch of plurality of reforming switches (RR1, RR2, RR3, RR4, RR5) based at least in part an expiration of a time.

13. The method (500) of any of claims 8 to 12, comprising sensing a voltage of the electrolytic capacitor (C1) and providing the voltage to the controller (120);
optionally comprising continuously monitoring the voltage of the electrolytic capacitor (C1).
and further optionally comprising modulating switching of the one or more reforming switches based on monitoring the voltage.

14. The method (500) of any of claims 8 to 13, wherein the primary switch (102, 302, 402) and the one or more reforming switches (RR1 to RR5) are at least one of a relay, a contactor, or a switching device.
